# EUROPEAN PATENT APPLICATION

(11) **EP 1 995 349 A1**
(43) Date of publication of application: **26.11.2008**
(21) Application number: 07708295.6
(22) Date of filing: 09.02.2007
(51) Int. Cl.: C23C 24/04, B32B 15/08, C08J 7/06

(54) **METHOD OF MAKING MOLDING SURFACE CONDUCTIVE AND MOLDED OBJECT WITH SURFACE CONDUCTIVITY**

(30) Priority: 15.03.2006 JP 2006070795
(71) Applicant: Mitsubishi Heavy Industries, Ltd., Tokyo 108-8215 (JP)
(72) Inventor: OGURI, Kazuyuki, Nagoya-shi, Aichi 4558515 (JP); SEKIGAWA, Takahiro, Nagoya-shi, Aichi 4558515 (JP); INOUE, Akiko, Nagoya-shi, Aichi 4558515 (JP); KAMIYA, Masami, Nagoya-shi, Aichi 4558515 (JP)
(74) Representative: Intes, Didier Gérard André
(86) International application number: PCT/JP2007/052359
(87) International publication number: WO 2007/108247

(57) **Abstract**

A metal coating with excellent adhesion is formed by a simple process on the surface of a formed article that comprises a resin, thereby imparting conductivity to the formed article. Metal particles are projected by a cold spraying method onto at least a portion of the surface of a formed article that comprises a resin, thereby forming a metal coating.

## Description

### Technical Field

The present invention relates to a process for imparting conductivity to the surface of a formed article, and a formed article with surface conductivity.

### Background Art

Resin-based composite materials comprising a resin, such as fiber-reinforced plastics, are lightweight and yet very strong, and are therefore widely used as structural materials within aircraft, automobiles and ships and the like. Because these types of resin-based composite materials comprise a resin of low conductivity as the matrix, in those cases where, for example, the material is used for the main wing structure of an aircraft, the surface of the material must be imparted with conductivity in order to provide lightning resistance. An example of a known process for imparting conductivity to the surface of a composite material involves a technique in which a copper foil is subjected to heated adhesion forming at the same time as the forming of the composite material, thereby exposing the copper foil at the surface of the composite material (for example, see patent citation 1).

Patent Citation 1: Japanese Unexamined Patent Application, Publication No. Hei 11-138669

### Disclosure of Invention

However, in the above process in which a copper foil is subjected to simultaneous heated adhesion forming at the surface of the resin-based composite material, adhesion has been problematic because the process results in the bonding of a resin and a copper foil with very different coefficients of thermal expansion,. Furthermore, because the coefficients of thermal expansion differ for the resin and the copper foil, bonding the copper foil across a large surface area of a resin-based composite material surface is impossible. Moreover, the operation of bonding a thin copper foil to the surface of a resin-based composite material is technically difficult.

The present invention has been developed in light of the above circumstances, and has an object of providing a process for imparting conductivity to a formed article, by producing a formed article comprising a resin, such as a resin-based composite material, and subsequently using a simple process to form a metal coating with excellent adhesion on the surface of the formed article, as well as providing a formed article with surface conductivity, comprising a metal coating with excellent adhesion disposed on the surface of a formed article that comprises a resin.

In order to achieve the above object, a process for imparting conductivity to a surface of a formed article according to the present invention comprises a step of projecting metal particles, using a cold spraying method, onto at least a portion of the surface of a formed article that comprises a resin, thereby forming a metal coating.
In this process, a simple technique in which metal particles are projected directly onto the surface of a formed article can be used to form a metal coating with excellent adhesion, thereby imparting conductivity to the formed article.

Furthermore, a formed article with surface conductivity according to the present invention is a structure comprising a formed article that comprises a resin, and a metal coating formed by a cold spraying method on at least a portion of the surface of the formed article.
This formed article with surface conductivity is produced using a simple technique in which metal particles are projected directly onto the surface of a formed article, and has a metal coating that exhibits excellent adhesion.

According to the present invention, a metal coating is formed on the uneven surface of a resin formed article such as a composite material, by bombarding the surface with metal particles at high speed. By using a simple apparatus to form a metal coating with excellent adhesion directly on the surface of a formed article, the surface of the formed article can be imparted with conductivity. Furthermore, the present invention also enables a formed article with surface conductivity, comprising a metal coating with excellent adhesion, to be produced using a simple process.

### Brief Description of Drawings

[FIG. 1] A cross-sectional photograph of a formed article with surface conductivity obtained using the conductivity-imparting process of an example 1.
[FIG. 2] A cross-sectional photograph of a formed article with surface conductivity obtained using the conductivity-imparting process of an example 2.

### Best Mode for Carrying Out the Invention

Embodiments of the process for imparting conductivity to a surface of a formed article and the formed article with surface conductivity according to the present invention are described below.

Examples of materials that can be used favorably as the resin formed article that undergoes surface coating with a metal coating in accordance with the present invention include composite materials in which a resin acts as the matrix, including fiber-reinforced plastics (FRP) comprising an inorganic fiber such as a glass fiber, carbon fiber, silicon carbide fiber, alumina fiber or boron fiber, or an organic fiber such as a nylon fiber, vinylon fiber or aramid fiber blended into a thermosetting resin such as an unsaturated polyester resin or epoxy resin, and fiber-reinforced thermoplastics (FRTP) comprising any of the above fibers blended into a thermoplastic resin such as a polycarbonate resin, methacrylic resin, polyvinyl chloride resin, polyamide resin or ABS resin. Particularly in those cases where the present invention is applied to the production of aircraft main wing structures or the like that have been imparted with lightning resistance, the use of a carbon fiber reinforced plastic (CFRP) or glass fiber reinforced plastic (GFRP) as the resin formed article is preferred. However, the present invention is not restricted to these types of materials, and articles formed solely from resins can also be used as the target for the conductivity-imparting process of the present invention.

The resin formed article is preferably subjected to a pretreatment following forming but prior to formation of the metal coating, by roughening the surface of the formed article by performing shot blasting using fine particles. Examples of the particles (the projection material) used in this shot blasting include hard particles such as metals, ceramics and glass, and of these, ceramic particles of alumina, silica, silicon carbide and zirconia and the like are particularly preferred. There are no particular restrictions on the shape of the particles used in the shot blasting, and both substantially spherical particles and particles with sharp edges such as the aforementioned alumina and silicon carbide particles may be used.

The average particle size of the projection material is typically not more than 200 µm, and is preferably not less than 10 µm but not more than 100 µm. If the average particle size of the projection material exceeds 200 µm, then the excessive kinetic energy of the projection material particles can cause damage to the surface of the formed article, and particularly in those cases where the formed article is the type of composite material described above, can cause damage to the interior fibers, which is very undesirable. Furthermore, if the average particle size of the projection material is smaller than 10 µm, then achieving a stable blast state becomes difficult.

By projecting the above projection particles onto at least a portion of the surface of a formed article that comprises a resin, the surface of the formed article is roughened by shot blasting. In shot blasting, the blast velocity is prescribed in terms of the blast pressure of the compressed air or the like. In the present invention, the blast pressure used during the shot blasting that is performed as a pretreatment to the formation of the metal coating is preferably not less than 0.1 MPa and not more than 1 MPa, and is even more preferably not less than 0.3 MPa and not more than 0.6 MPa. If the blast pressure is greater than 1 MPa, then the excessive kinetic energy of the projection material particles can cause damage to the surface of the formed article, and particularly in those cases where the formed article is the type of composite material described above, can cause damage to the interior fibers, which is very undesirable. Furthermore, if the blast pressure is less than 0.1 MPa, then achieving a stable blast state becomes difficult.

In the present invention, the shot blasting coverage is preferably not less than 100% and not more than 1,000%, and is even more preferably not less than 100% and not more than 500%. If this coverage is less than 100%, then the surface of the formed article cannot be satisfactorily roughened and activated, and the effect of the shot blasting in improving the adhesion between the treated surface of the formed article and a bonded object or a coating film is unattainable. Furthermore, if the coverage exceeds 1,000%, then the surface of the formed article may be damaged, and particularly in those cases where the formed article is the type of composite material described above, the interior fibers may be damaged, which is very undesirable.

The arithmetic mean surface roughness Ra of the treated surface of a formed article that has been subjected to a pretreatment under the conditions described above is preferably not less than 0.3 µm and not more than 2 µm. If the surface roughness of the treated surface is less than 0.3 µm, then the surface of the formed article cannot be satisfactorily roughened and activated, and the effect of the pretreatment in improving the adhesion between the treated surface of the formed article and a bonded object or a coating film is unattainable. Furthermore, if the surface roughness of the treated surface exceeds 2 µm, then in the case of a composite material described above, the interior fibers may be damaged, which is undesirable.

Following completion of this pretreatment, which may be used as required to roughen the surface of the resin formed article, metal particles are projected onto the surface of the resin formed article using a cold spraying method, thereby forming a metal coating.
The cold spraying method is a technique in which coating material particles are heated to a temperature that is lower than the melting point or softening point of the particles, and are then sprayed at ultrasonic speeds using a propellant gas, thereby causing the particles to slam into the substrate in a solid state, forming a coating. Upon slamming into the substrate, the particles undergo a plastic deformation and accumulate on the substrate surface, forming a coating.
In the present invention, comparatively soft metal particles are used as the coating material particles. Examples of the types of metal particles that can be used include particles of tin, copper, zinc, and alloys of these metals. Of these, tin particles or zinc particles form coatings that exhibit particularly favorable adhesion to resin formed articles, and therefore cold spraying using tin particles or zinc particles is preferably used at least in the initial stages of coating formation. Of the above materials, tin particles are particularly desirable.
The particle size of the metal particles is preferably not less than 10 µm and not more than 50 µm. A particle size of less than 10 µm is undesirable, as a stable spray state cannot be achieved. Furthermore, if the particle size exceeds 50 µm, then deposition of the particles becomes problematic, which is also undesirable.

Examples of the propellant gas used for spraying the metal particles include helium, nitrogen and air, and in terms of constructing an actual apparatus, the use of air is preferred, as it offers excellent operability and is low cost. However, depending on the circumstances, the use of an inert gas may be desirable in order to prevent oxidation or degeneration of the metal particles. In such cases, helium is particularly desirable as high flow velocities can be achieved.
Provided the collision velocity of the sprayed particles is greater than a certain fixed velocity, the kinetic energy of the particles causes the particles to undergo a plastic deformation, enabling formation of the coating to start. This fixed velocity is known as the critical velocity. This critical velocity varies depending on the materials used for the particles and the substrate, and the particle size. In the present invention, the spray pressure of the above propellant gas is selected so that the collision velocity of the metal particles striking the formed article reaches the critical velocity, and is typically set to a value of at least 0.5 to 0.6 MPa.
The heating temperature of the propellant gas comprising the metal particles is usually selected appropriately in accordance with the materials being used, and is typically set to a value of not less than 100°C and not more than 500°C.

Using the process described above, a metal coating is formed on at least a portion of the surface of the formed article, thereby imparting conductivity to the surface of the formed article.
In a formed article with surface conductivity obtained in this manner, the thickness of the metal coating is not less than 30 µm and not more than 2 mm. Particularly in those cases where the formed article with surface conductivity is used as an aircraft main wing structure that exhibits lightning resistance, the thickness of the metal coating is preferably not less than 50 µm and not more than 500 µm.
The metal coating may be formed from a single layer, or may be formed by laminating two or more layers together. In the case of a laminated coating, tin or zinc, either of which exhibits excellent adhesion to resins, is preferably used for forming the layer closest to the substrate of the formed article, and forming a layer of tin closest to the substrate of the formed article is particularly desirable. In order to achieve a particularly high level of conductivity, a layer of tin or zinc is preferably formed closest to the substrate of the formed article using the conductivity-imparting process of the present invention, and a layer of copper is then preferably formed on top using the conductivity-imparting process of the present invention.
Embodiments of the process for imparting conductivity to a surface of a formed article and the formed article with surface conductivity according to present invention have been described above, but in the present invention, other spraying methods such as thermal spraying may also be used instead of the cold spraying method described above.

The present invention is described in more detail below using a series of examples.

### [Example 1]

A formed article produced from a carbon fiber reinforced plastic (CFRP) was subjected to a cold spraying treatment under the conditions described below, thereby imparting conductivity to the surface of the formed article.
Metal particles: tin particles, average particle size 40 µm
Spraying conditions: spray pressure 0.5 MPa, gas heating temperature 300°C

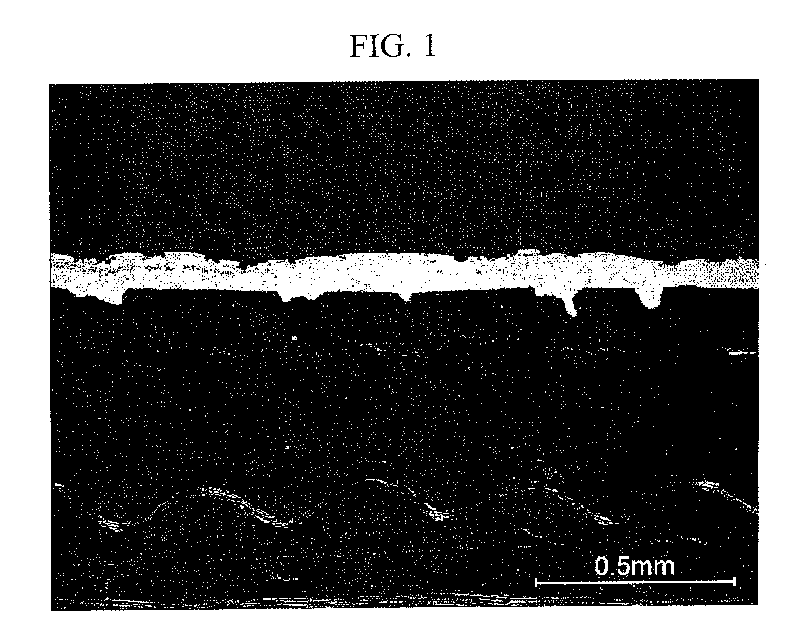

A cross-sectional photograph of the formed article with surface conductivity obtained via the above conductivity-imparting treatment is shown in FIG. 1.
From FIG. 1 it is evident that the tin coating has been formed with favorable tracking of the unevenness on the surface of the formed article.

### [Example 2]

A formed article produced from a carbon fiber reinforced plastic (CFRP) was subjected to a 2-stage cold spraying treatment under the conditions described below, thereby imparting conductivity to the surface of the formed article.

### (First Cold Spraying Treatment)

Metal particles: tin particles, average particle size 40 µm
Spraying conditions: spray pressure 0.5 MPa, gas heating temperature 300°C

### (Second Cold Spraying Treatment)

Metal particles: copper particles, average particle size 30 µm
Spraying conditions: spray pressure 0.6 MPa, gas heating temperature 400°C

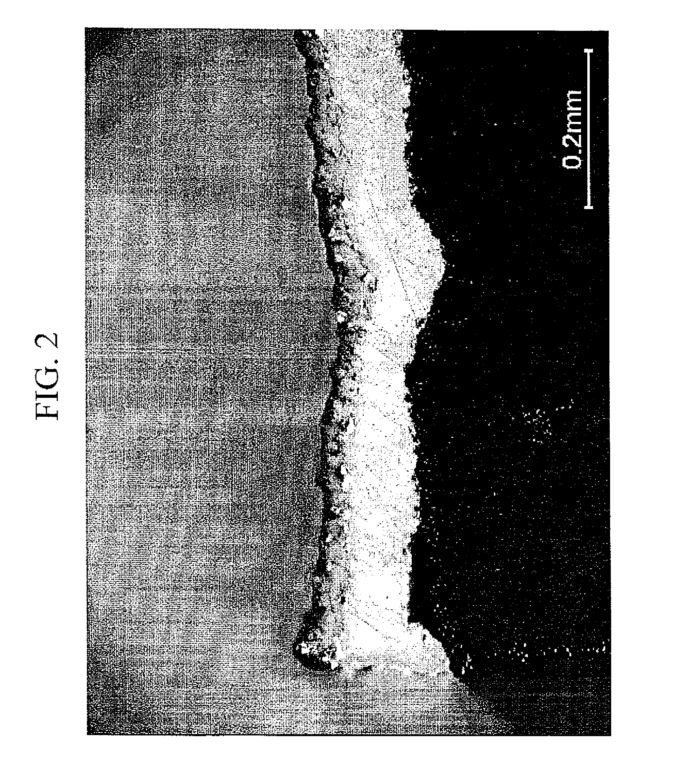

A cross-sectional photograph of the formed article with surface conductivity obtained via the above conductivity-imparting treatment is shown in FIG. 2.
From FIG. 2 it is evident that the tin coating has been formed with favorable tracking of the unevenness on the surface of the formed article, and that the copper coating has then be formed on top of the tin coating.

## Claims

1. A process for imparting conductivity to a surface of a formed article, comprising a step of projecting metal particles, using a cold spraying method, onto at least a portion of a surface of a formed article that comprises a resin, thereby forming a metal coating.

2. A formed article with surface conductivity, comprising a formed article that comprises a resin, and
a metal coating formed by a cold spraying method on at least a portion of a surface of the formed article.
